(19) Europäisches Patentamt / European Patent Office / Office européen des brevets

(11) **EP 1 743 874 A1**

## (12) EUROPEAN PATENT APPLICATION
published in accordance with Art. 158(3) EPC

(43) Date of publication:
**17.01.2007 Bulletin 2007/03**

(21) Application number: **05720271.5**

(22) Date of filing: **08.03.2005**

(51) Int Cl.:
***C03B 37/018*** (2006.01)

(86) International application number:
**PCT/JP2005/003999**

(87) International publication number:
**WO 2005/090250 (29.09.2005 Gazette 2005/39)**

(84) Designated Contracting States:
**DE FR IT**

(30) Priority: **19.03.2004 JP 2004080469**
**25.03.2004 JP 2004088944**
**25.03.2004 JP 2004088963**

(71) Applicant: **Shin-Etsu Chemical Company, Ltd.**
**Tokyo 100-0004 (JP)**

(72) Inventors:
• **NAKASHIMA, Yasuhiro,**
**c/o Shin-Etsu Chemical Co.Ltd**
**Kashima-gun, Ibaraki 3140116 (JP)**

• **FUJII, Hideki,**
**c/o Shin-Etsu Chemical Co. Ltd**
**Kashima-gun, Ibaraki 3140116 (JP)**
• **SATO, Mitsuji,**
**c/o Shin-Etsu Chemical Co. Ltd**
**Kashima-gun, Ibaraki 3140116 (JP)**
• **HOSHINO, Shoji,**
**c/o Shin-Etsu Chemical Co. Ltd**
**Kashima-gun, Ibaraki 3140116 (JP)**

(74) Representative: **Pfenning, Meinig & Partner GbR**
**Joachimstaler Strasse 10-12**
**10719 Berlin (DE)**

## (54) METHOD FOR PRODUCING GLASS BASE MATERIAL FOR OPTICAL FIBER

(57) A method of manufacturing a glass base material is provided. The glass base material according to the present invention can prevent an initial glass material from being scratched by a gripping portion and from being unfastened and can manufacture in a stable state without deflecting the initial glass material during depositing glass particles when the initial glass material is gripped by metal chucks, and the glass particle are deposited on the periphery of the initial glass material. A cushioning material of which surface has irregularity is intervened between the initial glass material and the gripping portion of a gripping device when the initial glass material is rotated with gripped by the gripping device and the glass particles are deposited on the periphery of the staring glass material. The cushioning material is preferably an elastic material having the thickness twice as long as the depth of the irregularity on the surface of the initial glass material.

*FIG. 2*

## Description

### TECHNICAL FIELD

The present invention relates to a method of forming an aggregate of glass particles on the periphery of a column-shaped or cylindrical initial glass material. Particularly the present invention relates to a method of manufacturing a porous glass base material for an optical fiber, which is appropriately used as an intermediate product when a high purity porous glass base material is manufactured.

The present application claims priority from Japanese Patent Applications No.2004-080469 filed on March 19, 2004, No.2004-088944 filed on March 25, 2004 and No.2004-088963 filed on March 25, 2004, the contents of which are incorporated herein by reference.

### BACKGROUND ART

Usually, the optical fiber is manufactured by drawing the glass base material for an optical fiber made of high purity synthetic silica glass into a predetermined diameter by a drawing device and coating thereon. The glass base material for an optical fiber (hereinafter referred to as simply a glass base material) is manufactured by using methods such as VAD(Vapor Phase Axial Deposition) and OVD(Outside Vapor Deposition).

Conventionally, in order to manufacture the glass base material or the silica glass tube, a method has been employed, which includes the following steps: rotating an initial glass material with it fixed; forming a deposition of glass particles on the periphery of the initial glass material; rotating the initial glass material with the periphery thereof directly gripped by chucks; and heat-treating the initial glass material in a furnace to dehydrate and vitrify it into a transparent glass body, so that a glass base material can be obtained, disclosed as, for example in Japanese Patent Application Publication No. 60-161434, No.62-207734, No.2000-53437, and No. 2002-362935.

### DISCLOSURE OF THE INVENTION

### PROBLEMS TO BE SOLVED BY THE INVENTION

However, in the conventional method, the surface of the glass is scratched when the initial glass material is attached to the metal chucks, so that a crack is generated from the scratch. Recently, the size of glass base material has been increased in order to improve productivity thereby to cause problems that when glass particles are deposited, the gripped portion suffers a large amount of load by receiving the radiant heat from a burner and increasing the load because of increasing the weight of the deposition, so that the initial glass material is displaced, unfastened and deflected.

Then, when the initial glass material is deflected, the core of the finished product may be deflected, further at worst, the glass body is broken during depositing, or the gripped portion is damaged thereby the glass body is broken up.

The object of the present invention is to provide a method of manufacturing a glass base material that can prevent the initial glass material from being scratched and unfastened when the initial glass material is gripped by metal chucks and glass particles are deposited on the periphery of the initial glass material, and also can prevent the initial glass material from deflecting during depositing the glass particles thereby to manufacture the glass base material in a stable state. Hereinafter, the portion of the initial glass material which is gripped by the chuck will be referred to as "glass rod" regardless of with or without a dummy rod attached to the end thereof.

### MEANS FOR SOLVING THE PROBLEMS

To solve the above-described problem, a first aspect of the present invention provides a method of manufacturing a glass base material. The method includes the steps of: rotating an initial glass material with the initial glass material gripped by a gripping device; and depositing glass particles on the periphery of the initial class material. When the initial glass material is rotated with being gripped by a gripping device and the glass particles are deposited on the periphery thereof, a cushioning material of which surface has irregularity is intervened between the initial glass material and a gripped portion of the gripping device.

it is preferred that the cushioning material between the initial glass material and the gripping device is an elastic material having the thickness more than at least twice as long as the depth of irregularity on the surface of the initial glass material. Additionally, it is preferred that the cushioning material is a material of which decreasing rate of the tensile strength has less than 50% when a steaming test is performed at 5.0 MPa for one hour, of which ignition loss is less than 32% when an ignition test is performed at 850 degree centigrade for 0.5 hours and of which stress relaxation rate is less than 50% when a heating test is performed at 100 degree centigrade for 22 hours.

When the initial glass material is griped by the gripping device, it is preferred that molding lubricant is coated on the surface of the cushioning material in contact with the initial glass material side. Additionally, when the initial glass material is gripped by the gripped portion of the gripping device through the cushioning material between the initial glass material and the gripping section of the gripping device, it is preferred that the initial glass material is gripped with a tightening torque which is controlled to keep constant. Here, the tightening torque is controlled to keep constant within 60-100% of the maximum handle torque of the gripping chuck.

A second aspect of the present invention provides A manufacturing apparatus of a glass base material for an optical fiber that deposits glass particles on the periphery of an initial glass material. When a gripped portion (glass rod) of the initial glass material is gripped by a gripping mechanism and attached to the manufacturing apparatus, the shape of gripping surface of the gripping mechanism is curved dependent on the thickness and the shape of the glass rod and the cushioning material wound around the glass rod. Here, when the outside diameter of the glass rod being the gripped portion is D, and the thickness of the cushioning material is d, it is preferred that the radius(R) of the curved surface is within a value derived by the following formula;

$$(D+d)\times 0.8/2 < R < (D+d)\times 1.2/2$$

A third aspect of the present invention provides a method of processing a glass base material for an optical fiber. The method includes the steps of: rotating a glass base material for an optical fiber with at least one end of the glass base material for an optical fiber gripped by the gripped portion; and heating the glass base material for an optical fiber by a heat source. When the glass base material for an optical fiber or a dummy rod connected to the glass base material for an optical fiber is gripped, the glass base material for an optical fiber is gripped through a cushioning material.

. The cushioning material contains at least one kind of fire retardant fibrous material. It is preferred that the cushioning material is a material containing at least one of serpentine, chrysotile or tremolite.

Additionally, it is preferred that the cushioning material contains 30% by mass of a material containing a fire retardant fibrous material. Further, it is preferred that the cushioning material is a plate-like material (including a sheet-like material), a material of which tensile strength is more than 10MPa, and a material of which resilience is more than 30%.

Here, all necessary features of the present invention are not listed in the summary of the invention. The sub-combinations of the features may become the invention.

EFFECT OF THE INVENTION

As evidenced by the above description, according to the first aspect of the present invention, a sheet (cushioning material) having elastic properties regardless of being under a high temperature is wound around the periphery of the initial glass material in a predetermined thickness, fixed and gripped, so that the surface of the initial glass material is prevented from being scratched and cracked at the gripped portion. Additionally, the irregularity of the surface of the initial glass material is absorbed by the sheet material, so that the unfastening and the deflection of the initial glass material can be prevented. Therefore, the glass base material of which core is not deflected can be efficiently manufactured.

According to the second aspect of the present invention, the initial glass material is not deflected, unfastened at the gripped portion and damaged while the glass particles are deposited, so that the base material for an optical fiber can be manufactured in a stable state. Therefore, the glass base material for an optical fiber of which core is hardly deflected can be manufactured.

According to the third aspect of the present invention, the glass base material for an optical fiber and the dummy rod can be processed without being scratched. Therefore, the yield can be improved and the glass body can be prevented from being damaged because of without being scratched, so that the yield can be prevented from being reduced because of falling the glass body. Additionally, the initial glass material can be gripped by larger force without being scratched, so that the gripped portions can be prevented from being loosed or slipped when a diameter-narrowing process to tension the glass base material for an optical fiber is performed by extending the distance between the gripped portions. Therefore, the diameter of the glass base material for an optical fiber can be precisely processed in a longitudinal direction. Further, an excellent effect such as an accident prevention can be achieved.

BRIEF DESCRIPTION OF THE DRAWINGS

Fig.1 is a front view schematically showing a reaction vessel 30 of an manufacturing apparatus of a glass base material according to an embodiment of the present invention.

Fig.2 is a schematic diagram showing a gripping device 80 of the manufacturing apparatus of a glass base material shown in Fig.1.

Fig.3A is a schematic diagram showing a state of gripping a glass rod by chuck pawls according to an embodiment 4; and

Fig.3B is a schematic diagram showing a state of gripping a glass rod by chuck pawls according to an comparative example 4

BEST MODE FOR CARRYING OUT THE INVENTION

Hereinafter, the present invention will now be described through referred embodiments. The embodiments do not limit the invention according to claims and all combinations of the features described in the embodiments are not necessarily essential to means for solving the problems of the invention.

A porous glass base material which will be a precursor of a glass base material provided to draw an optical fiber is manufactured by attaching an initial glass material to the gripping sections of a gripping device, such as chucks and depositing glass particles on the periphery thereof. At this time, the initial glass material may be cracked at the gripped portions during depositing the glass particles as described above.

Considering the cause of the cracking, it was found out that the crack is generated from a scratch on the surface of the initial glass material. Thus, in order to prevent the scratch causing the crack, a cushioning material of which surface has irregularity is intervened between the initial glass material and the chucks. Therefore, the surface of the initial glass material can be prevented from being scratched when the initial glass material is attached and tightened up.

As progressing to deposit glass particles, the temperature of the initial glass material is gradually increased along with increasing the weight, so that a force to displace the gripped portions is generated. At this time, if the surface of the initial glass material has irregularity, the initial glass material may be displaced and unfastened. It was found out that once unfastened, the initial glass material is further displaced so that the initial glass material may be deflected, and broken at the gripped portions because the excess force is applied.

Thus, when the initial glass is fixed, a sheet material of which elastic property is not damaged regardless of being under the high temperature is wound around the periphery thereof and a cushioning material is intervened between the initial glass material and the chucks. Therefore, the irregularity of the surface of the initial glass material can be absorbed, so that the initial glass material can be tightly fixed to the chucks. Additionally, since the elastic property is not damaged even if thermal load is applied by the fire of a burner during depositing glass particles, the gripped portions are not displaced and not unfastened. Therefore, the gripped portions can be in the stable state at the completion of depositing. It is preferred that the thickness of the cushioning material used to fix the initial glass material is at least more than twice as long as the depth of the irregularity of the surface of the gripped portion of the initial glass material.

Therefore, the initial glass material can be prevented from deflecting during depositing glass particles because of displacing the initial glass material, and the glass particles can be prevented from stopping depositing because the gripped portions are broken. Additionally, if the time for depositing is extended along with enlarging the base material, the sheet material wound around the initial glass material may be burned by applying heat for a long time. However, mold lubricant is coated on the surface of the sheet material in contact with the initial glass material, so that the sheet material can be prevented from being burned.

Additionally, the present inventers variously considered about a method of fixing the initial glass material when a porous glass base material is manufactured by rotating the initial glass material and depositing glass particles on the periphery of the initial glass material. As the result, it was found out as follows. The load applied to the gripped portion being a glass rod is gradually increased because of increasing the temperature and the weight accompanied by progressing to deposit glass particles dependent on the method of fixing the initial glass material. Thereby the sheet material as the cushioning material wound around the glass rod is displaced and unfastened. Therefore, the central axis of the initial glass material is displaced from the rotational axis of the apparatus, so that the initial glass material is deflected and broken because of applying the excess force to the glass rod being the gripped portion.

Thus, the shape of the gripping surface of the gripping mechanism is formed by adding thereto the outer diameter of the glass rod and the thickness of the cushioning material wound around the glass rod in order that the periphery of the glass rod is tightly fixed by the gripping mechanism. Therefore, glass particles can be deposited while the glass rod is closely gripping by the gripping mechanism without displacing the gripping mechanism from the glass rod from beginning to end of the deposition. Therefore, the initial glass material can be prevented from being deflected because of displacing the glass rod during depositing glass particles, and also the glass particles can be prevented from stopping depositing because the initial glass material is broken at the gripped portion.

As the initial glass material of the present invention such as a column-shaped or cylindrical initial glass material, a glass rod which will be the core, or a glass rod having the core and a part of cladding can be used.

During depositing glass particles, the initial glass material is under the high temperature state because of receiving radiant heat or conductive heat of such as burner flame. Therefore, it is preferred that the cushioning material used for fixing is a material of which decreasing rate of the tensile strength has less than 50% when a steaming test is performed at 5.0 MPa for one hour, of which ignition loss is less than 32% when an ignition test is performed at 850 degree centigrade for 0.5 hours and of which stress relaxation rate is less than 50% when a heating test is performed at 100 degree centigrade for 22 hours. Additionally, when the initial glass material is gripped through the cushioning material, it is preferred that the initial glass material is gripped with the tightening torque which is controlled to keep constant. Here, the tightening torque is controlled to keep constant within 60-100% of the maximum handle torque of the gripping chuck.

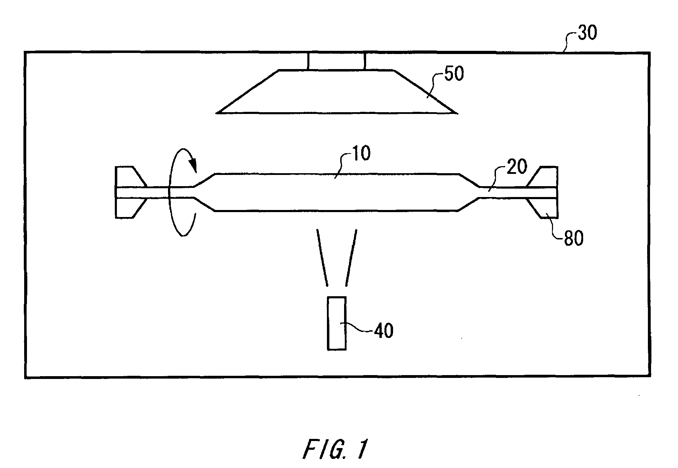

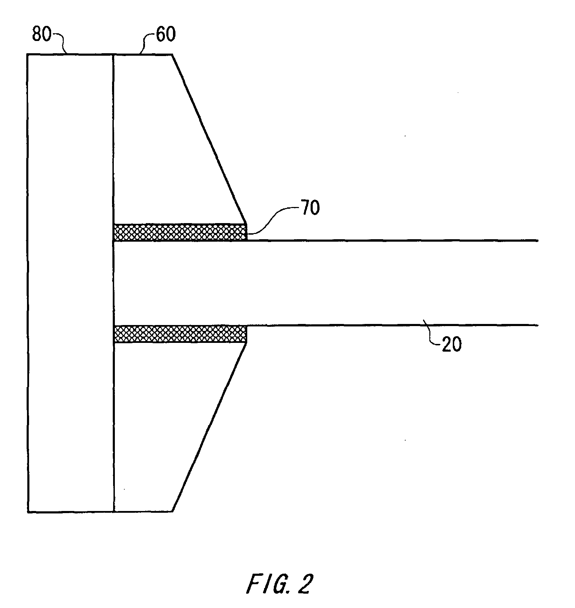

Fig. 1 is a front view schematically showing a reaction vessel 30 of an manufacturing apparatus of a glass base material according to an embodiment of the present invention. Fig.2 is a enlarged view showing around a gripping device 80 of an manufacturing apparatus shown in Fig.1. The manufacturing apparatus as shown in Fig.1 and Fig.2 includes a reaction vessel 30, a heat source 40 and the gripping device 80 disposed in the reaction vessel 30, and an exhaust port 50 for exhausting air in the reaction vessel 30. The gripping device 80 includes a chuck 60 being a gripping section for gripping the initial glass material 20 through the cushioning material 70.

Further, when the glass base material for an optical fiber is heated by the heat source and processed, the glass base material for an optical fiber or the glass rod is gripped through the cushioning material, so that the joints between the dummy rods which are coupled to both ends of the glass base material for an optical fiber and the glass base material for an optical fiber are prevented from being broken during processing. Therefore, the yield is not reduced during processing and also any accident can be prevented.

The glass base material for an optical fiber or the dummy rod is attached to the gripped portion being a glass lathe through the cushioning material. Alternatively, the cushioning material may be wound around the end of the glass base material for an optical fiber or the dummy rod, or the cushioning material may be inserted in only the pawl portion of the gripped portion.

As the heat source, a burner can be appropriately used, which needs oxygen to support burning and needs chain hydrocarbon to burn. Additionally, since the gripped portion is under the high temperature state, the cushioning material to be used should have heat resistance. Further, the cushioning material is tensioned when the glass base material for an optical fiber is drawn, so that it should have high frictional resistance in order to prevent from slipping on the glass base material for an optical fiber or the dummy rod.

The cushioning material has to contain at least more than one kind of fire retardant fibrous material to have heat resistance. The content of fire retardant fibrous material is preferably more than 30% by mass, more preferably more than 50% by mass, so that the enough heat resistance can be obtained. It is preferred that at least one of serpentine, chrysotile or tremolite is selected as fire retardant fibrous material and added to the cushioning material. Additionally, elastomer component is contained to the cushioning material, so that an appropriate plate-like cushioning material can be easily formed. Then, vulcanizing agent and filler are added to the plate-like cushioning material according to need, so that a necessary friction resistance with the formability can be provided to the elastomer component.

Additionally, the cushioning material needs the strength characteristic of which tensile strength is more than 10MPa. If the tensile strength is less than 10MPa, the cushioning material is broken off when it is fastened and tensioned, so that the cushioning material can not operate as a cushioning material. Further, the cushioning material needs more than 30%, preferably more than 40% of resilience. If the resilience is less than 30%, the cushioning material is broken down and can not to be recycled, therefore, it is not preferred from an economical standpoint.

Hereinafter, the present invention will now be further described through referred embodiments and comparative examples. The embodiments and comparative examples do not limit the invention.

Embodiment 1

A glass rod formed by the VAD method, of which diameter is 35mm and which includes SiO2, and in which $GeO_2$ is added to the core at 0.3% of the relative index difference is as an initial glass material 20. A joint sheet of which decreasing rate of tensile strength is less than 50% when the steaming test is performed at 5.0 MPa for one hour and of which surface has irregularity is wound around the initial glass material 20 as a cushioning material 70. Next, the initial glass material 20 is set on the chuck 60 installed in the reaction vessel 30 as shown in Fig. 1. Then, $SiCl_4$ is provided to a burner for synthesizing glass particles as the heat source 40, and the generated glass particles are deposited on the initial glass material 20 for 36 hours. When a predetermined deposition is completed, a porous glass base material 10 is taken out from the reaction vessel 30 and the surface of the portion of the initial glass material 20 which is gripped by the chuck 60 is checked. As the result, there is no scratch on the surface of the portion gripped by the chuck 60. Here, the cushioning material 70 used in the embodiment 1 satisfies the condition that the stress relaxation rate is less than 50%, the ignition loss is less than 32%, and the decreasing rate of the tensile strength is less than 50% under the steaming test as well as the following embodiments 2 and 3.

Comparative example 1

The initial glass material 20 is used as well as the embodiment 1. The glass particles is deposited under the condition same as that of the embodiment 1 except that the initial glass material 20 is directly fixed to the chuck 60. However, the portion of the initial glass material 20, which is gripped by the chuck 60 is broken during depositing, so that the deposition is stopped. When the broken portion of the initial glass material is checked, it is found that a scratch is generated on the surface of the glass body and the crack runs from the scratch.

Example 2

The initial glass material 20 is used as well as the embodiment 1. The initial glass material 20 is set in the reaction vessel 30 shown in Fig.1. When the diameter of the portion of the initial glass material, which is gripped by the chuck 60 is measured, it changes within 29.6mm-30.1mm. Therefore, a sheet material having the thickness of 0.8mm, of which surface has irregularity and of which ignition loss is less than 32% when the ignition test is performed at 850 degree centigrade for 0.5 hours is wound around the initial glass material 20 as the cushioning material 70, and then, the initial glass material 20 is fixed to the chuck 60. After correcting the skew of the initial glass material 20, $SiCl_4$ is provided by the burner for synthesizing glass particles, and the glass particles are deposited in the reaction vessel 30. As the result, the deflection of the initial glass material 20 is less than 0.1mm through depositing. The porous glass base material 10 obtained by the present embodiment, which has a diameter of 100mm and a length of 1000mm is heated in He atmosphere at 1600 degree centigrade to vitrify it into a transparent. The deflected core for each of five performs for an optical fiber obtained by the above-described process, which has a diameter of 50mm and a length of 1000mm is measured. The deflected core rate of the deflected core is less than 0.1%.

Comparative example 2

The initial glass material 20 is used as well as the embodiment 1. After winding Kevlar fiber around the initial glass material 20 in order to protect from heat, the initial glass material 20 is fixed to the chuck 60. Then, grass particles are deposited under the condition the same as that of the example 1. As the result, the deflection of the initial glass material 20 is 0.3mm at the middle of the deposition, and is 0.45mm at the last half of the deposition. The deflected core for each of five performs for an optical fiber obtained in the present comparative example, which has a diameter of 48mm and a length of 1000mm is measured. As the result, the deflected core rate of the deflected core is less than 0.1%. The deflected core rate is 0.3% at the fixed side at sintering, and is more than 0.5% at the end side.

Embodiment 3

The initial glass material 20 is used as well as the embodiment 1. A sheet material of which stress relaxation force is less than 50% when the heat test is performed at 100 degree centigrade for 22 hours is used as the cushioning material 70 to be wound around the initial glass material 20. Dimethylsilicon oil as mold lubricant is evenly applied to one side of the sheet material in contact with the surface of the initial glass material 20 in advance and dried. After the surface is dried, the sheet material is wound around the initial glass material 20. Then, the initial glass material 20 with the cushioning material 70 is set on the chuck 60 of the manufacturing apparatus shown in Fig.1 and Fig.2, fixed with the tightening torque 50N/m approximately 80% of the maximum handle torque for the chuck specification. Then, SiCl4 is provided to the burner for synthesizing glass particles, and the generated glass particles are deposited for 36 hours. The deflection of the porous glass base material 10 during depositing is measured. As the result, the deflection is less than 0.1mm. When a predetermined amount of deposition is completed, the gripped portion is released and the sheet material is peeled from the surface of the initial glass material 20. There is no adhesion and the glass body is not broken because of adhering the glass on the surface of the sheet material.

Comparative example 3

The initial glass material 20 is used as well as the embodiment 1. A sheet material without mold lubricant is wound around the initial glass material 20. Then, the initial glass material 20 is set on the chuck 60 in the reaction vessel 30, fixed with the tightening torque 50N/m. Then, the glass particles are deposited under the condition the same as that of the embodiment 2. After the deposition is completed, the chuck 60 is released. As the result, the sheet material is burned and adhered on the portion of the initial glass material 20, which is gripped by the chuck 60. Then, when the adhesion is peeled off, the glass of the gripped portion is partially broken, so that the initial glass material 20 can not be progressed to the next process.

Example 4

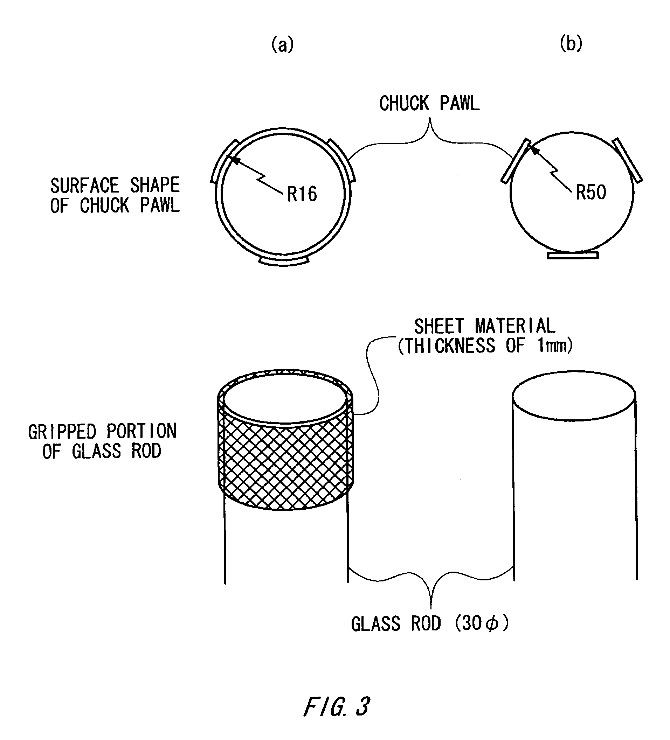

A glass rod formed by the VAD method, of which diameter is 30 mm and which includes SiO2, and in which $GeO_2$ is added to the core is used as the initial glass material 20. Considering the outer diameter of the glass rod and the cushioning material 1 mm in thickness which is wound around the glass rod in order that the glass rod is tightly fixed by the gripping mechanism, the gripping surface is gripped by the chuck having three pawls each of which diameter is set to 16 mm (R16) as shown in Fig. 3A, and then, the glass rod with the cushioning material is set in the reaction vessel.

Then, the skew of the initial glass material is corrected. $SiCl_4$ is provided to the burner for synthesizing glass particles, and the generated glass particles are deposited. The deflection of soot deposition is measured at the middle and the last half of deposition. As the result, the amount of deflection is less than 0.1mm at both of the middle and the last half of deposition. The obtained soot deposition having a diameter of 98 mm and a length of 1000 mm is heated and vitrified into a transparent glass body to acquire a glass base material for an optical fiber having a diameter of 47 mm and a length of 1000 mm. When five deflected cores are measured in a longitudinal direction, each deflected core rate is 0.1 %.

Example 4

The initial glass material 20 is used as well as the embodiment 4. As shown in Fig.3B, the initial glass material 20 is gripped by the chuck having three pawls each of which gripping surface has a diameter of 50 mm (R50) and is set in the reaction vessel. Then, when glass particle is deposited under the condition the same as that of the embodiment 4 except for above, soot deposition is cracked, so that the manufacturing process is stopped.

Then, when soot deposition is taken out from the reaction vessel and the gripped portion is checked, the scar by gripping is found at only the center of the pawl on one side of the soot deposition. However, on the other side of the soot deposition, the sheet material is buckled at the center and broken thereby to be fallen down.

Example 5

Two dummy rods made of silica glass and each having a diameterφ of 60 mm and a length of 400 mm are oppositely attached to both sides of the gripped portions being the glass lathes. Then, a glass base material for an optical fiber having a diameterφ of 60 mm and a length of 1000 mm is welded to the end of one of the dummy rods by heating with oxyhydrogen flame of the burner. After the skew is corrected, the glass base material for an optical fiber is welded to the other dummy rod. At this time, the gripped portion being the glass lathe contains more than 60% of chrysotile having 180 mm-squire and the thickness of 1 mm. In addition, a sheet including elastomeric material and filler, of which tensile strength is 30MPa is intervened between the gripped portion and the dummy rod.

Then, the glass base material for an optical fiber gripped as described above is heated with oxyhydrogen flame of the burner, drawn and reduced to 55 mm in diameterφ. Then, fire polishing is performed on the surface of the glass base material for an optical fiber. After fire polishing, the grass base material for an optical fiber is tested. As the result, the rate of occurrence of scratch in the glass base material for an optical fiber is less than 0.5%, and the rate of occurrence of crack in the dummy rod is less than 0.5%. Then, the gripped section is not slipped during drawing.

Comparative example 5

The drawing and the fire polishing are performed on the glass base material for an optical fiber having a diameterφ of 60 mm and a length of 1000 mm as well as the embodiment 5 without intervening the cushioning material in the gripped section. In this case, the rate of occurrence of scratch in the glass base material for an optical fiber is more than 15%, and the rate of occurrence of crack in the dummy rod is more than 5%. Therefore, the yield is singularly bad.

Comparative example 5

The drawing and the fire polishing is performed under condition the same as that of the embodiment 5 except that the tensile strength of the cushioning material used is 8MPa. In this case, any scratch does not occur in the glass base material for an optical fiber, but the gripped portion is slipped during drawing. Therefore, the process is stopped.

While the present invention have been described with the embodiment, the technical scope of the invention not limited to the above described embodiment. It is apparent to persons skilled in the art that various alternations and improvements can be added to the above-described embodiment. It is apparent from the scope of the claims that the embodiment added such alternation or improvements can be included in the technical scope of the invention.

INDUSTRIAL APPLICABILITY

According to the present invention, accidents because of cracking during the manufacturing process are reduced, the yield is improved, so that the manufacturing cost can be reduced.

**Claims**

1. A method of manufacturing a glass base material for an optical fiber, comprising:

   rotating an initial glass material with the initial glass material gripped by the gripping device; and
   depositing glass particles on the periphery of the initial glass material,

   wherein a cushioning material of which surface has irregularity is intervened between the initial glass material and a gripping section of the gripping device.

2. The method of manufacturing a glass base material for an optical fiber according to Claim 1, wherein the cushioning material is an elastic material having the thickness twice as long as the depth of the irregularity on the surface of the initial glass material.

3. The method of manufacturing a glass base material for an optical fiber according to Claim 1, wherein the decreasing rate of tensile strength of the cushioning material intervened between the initial glass material and the gripping section of the gripping device is less than 50% based on a steaming test which is performed at 5.0MPa for one hour.

4. The method of manufacturing a glass base material for an optical fiber according to Claim 1, wherein the ignition loss of the cushioning device intervened between the initial glass material and the gripping section of the gripping device is less than 32% based on an ignition test which is performed at 850 degree centigrade for 0.5 hours.

5. The method of manufacturing a glass base material for an optical fiber according to Claim 1, wherein the stress relaxation rate of the cushioning device intervened between the initial glass material and the gripping section of the gripping device is less than 50% when a heat test is performed at 100 degree centigrade for 22 hours.

6. The method of manufacturing a glass base material for an optical fiber according to Claim 1, wherein mold lubricant is applied on the surface of the cushioning material in contact with the initial glass material side.

7. The method of manufacturing a glass base material for an optical fiber according to Claim 1, wherein a tightening torque to tighten is held constant when the initial glass material is gripped with the cushioning material intervened between the initial glass material and the gripping section of the gripping device.

8. The method of manufacturing a glass base material for an optical fiber according to Claim 1, wherein the tightening torque is held constant within 60%-100% of the maximum handle torque of a gripping chuck.

9. A manufacturing apparatus of a glass base material for an optical device that deposits glass particles on the periphery of an initial glass material, wherein when a glass rod being the initial glass material is gripped by a gripping mechanism and attached to the manufacturing apparatus, the shape of the gripping surface of the gripping mechanism is curbed dependent on the thickness and the shape of the glass rod and the cushioning material wound around the glass rod.

10. The manufacturing apparatus of a glass base material for an optical fiber according to Claim 9, wherein if the outside diameter of the glass rod is D and the thickness of the cushioning material is d, the radius (R) of the curved surface is within a value derived by the following formula: $(D+d)\times0.8/2<R<(D+d)\times1.2/2$.

11. A method of processing a glass base material for an optical fiber, comprising:

    rotating a glass base material for an optical fiber with at least one end of the glass base material for an optical fiber gripped at a gripped portion; and
    heating the glass base material for an optical fiber by a heat source, wherein when the glass base material for an optical fiber or a dummy rod connected to the glass base material for an optical fiber is gripped, the glass base material for an optical fiber is gripped through a cushioning material.

12. The method of processing a glass base material for an optical fiber according to Claim 11, wherein the cushioning material contains more than one kind of fire retardant fibrous material.

13. The method of processing a glass base material for an optical fiber according to Claim 12, wherein the fire retardant fibrous material contains at least one of serpentine, chrysotile or tremolite.

14. The method of processing a glass base material for an optical fiber according to Claim 11, wherein the cushioning material contains more than 30% by mass of fire retardant fibrous material.

15. The method of processing a glass base material for an optical fiber according to Claim 11, wherein the cushioning material is formed of a plate containing elastomer component.

16. The method of processing a glass base material for an optical fiber according to Claim 11, wherein the cushioning material has more than 10MPa of the tensile strength.

17. The method of processing a glass base material for an optical fiber according to Claim 11, wherein the cushioning material has more than 30% of the resilience.

FIG. 1

*FIG. 2*

(a)                                                    (b)

CHUCK PAWL

SURFACE SHAPE
OF CHUCK PAWL

R16                                      R50

SHEET MATERIAL
(THICKNESS OF 1mm)

GRIPPED PORTION
OF GLASS ROD

GLASS ROD (30 φ)

FIG. 3

## INTERNATIONAL SEARCH REPORT

International application No.

PCT/JP2005/003999

**A. CLASSIFICATION OF SUBJECT MATTER**
Int.Cl$^7$ C03B37/018

According to International Patent Classification (IPC) or to both national classification and IPC

**B. FIELDS SEARCHED**

Minimum documentation searched (classification system followed by classification symbols)
Int.Cl$^7$ C03B37/018

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-300740 A (Sumitomo Electric Industries, Ltd.), | 1-5,7,8, 11-17 |
| Y | 21 October, 2003 (21.10.03), Claims; Par. Nos. [0012] to [0014]; Fig. 1 (Family: none) | 6,9,10 |
| Y | JP 11-278861 A (Fujikura Ltd.), 12 October, 1999 (12.10.99), Par. No. [0008] (Family: none) | 6 |
| Y | JP 2000-053437 A (Shin-Etsu Chemical Co., Ltd.), 22 February, 2000 (22.02.00), Claims; Par. Nos. [0010] to [0013], [0022], [0023]; Figs. 1 to 3 (Family: none) | 9,10 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 May, 2005 (06.05.05) | 24 May, 2005 (24.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004080469 A
- JP 2004088944 A
- JP 2004088963 A
- JP 60161434 A
- JP 62207734 A
- JP 2000053437 A
- JP 2002362935 A